# EUROPEAN PATENT SPECIFICATION

(11) **EP 4 391 649 B1**
(45) Date of publication and mention of the grant of the patent: **21.01.2026**
(21) Application number: 23214845.2
(22) Date of filing: 07.12.2023
(51) Int. Cl.: H04W 36/00, H04W 52/02, H04W 36/36, H04W 36/24

(54) **CONDITIONAL HANDOVER PROCEDURE**
BEDINGTES ÜBERGABEVERFAHREN
PROCÉDURE DE TRANSFERT CONDITIONNEL

(30) Priority: 23.12.2022 GB 202219616
(43) Date of publication of application: 26.06.2024
(73) Proprietor: Nokia Technologies Oy, 02610 Espoo (FI)
(72) Inventor: TAYYAB, Muhammad, Oulu (FI); GÜRSU, Halit Murat, München (DE)
(74) Representative: Kolster Oy Ab

(56) References cited:
- WO-A1-2020/145787
- US-A1- 2016 219 487
- US-A1- 2018 295 552
- US-A1- 2019 289 552
- US-A1- 2022 256 426
- XIAOMI: "Discussion on RRM measurement relaxation in connected mode for NR power saving enhancement", vol. RAN WG4, no. Electronic Meeting; 20201102 - 20201113, 23 October 2020 (2020-10-23), XP052417416, Retrieved from the Internet <URL:https://ftp.3gpp.org/tsg_ran/WG4_Radio/TSGR4_97_e/Docs/R4-2014654.zip R4-2014654 Discussion on RRM measurement relaxation in connected mode for NR power saving enhancement.docx> [retrieved on 20201023]

## Description

### FIELD

The following example embodiments relate to wireless communication, and in particular to a terminal device and a corresponding method for engaging, based at least on the energy status of the terminal device, in a handover procedure.

### BACKGROUND

In wireless communication, terminal devices may have limited energy available. Thus, it is desirable to save energy when the available energy is low.

US2016219487A1 discloses a user equipment assisted handover in licensed and unlicensed frequency bands.

US2022256426A1 discloses a method and apparatus for measurement reporting during a conditional primary cell (PCell) handover in a wireless communication system.

US2019289552A1 discloses a method performed by a wireless device such as a user equipment (UE). The method generally includes: identifying at least one indicator to conserve power; and in response to the identification, determining to skip one or more periodic or semi-persistent measurements of a signal from a cell based on at least one criteria.

US2018295552A1 relates to methods and apparatus for inter-radio access technology (RAT) resource switching based on power consumption using communications systems operating according to, for example, new radio (NR) technologies.

WO2020145787A1 discloses a method of receiving measurement configuration information, performed by a terminal in a wireless communication system, the method comprising: receiving the measurement configuration information from a base station; performing measurement on the basis of the measurement configuration information; and transmitting a measurement result acquired on the basis of the measurement to the base station, wherein the measurement configuration information includes a first measurement configuration and a second measurement configuration, and a first power mode in which the first measurement configuration is used is different from a second power mode in which the second measurement configuration is used.

### SUMMARY

The invention is set out by the independent claims.

### LIST OF DRAWINGS

In the following, various example embodiments will be described in greater detail with reference to the accompanying drawings, in which
FIG. 1 illustrates an example of a cellular communication network;
FIG. 2 illustrates a flow chart;
FIG. 3 illustrates a flow chart;
FIG. 4 illustrates a signaling diagram;
FIG. 5 illustrates a signaling diagram;
FIG. 6 illustrates a signaling diagram;
FIG. 7 illustrates a signaling diagram;
FIG. 8 illustrates a signaling diagram;
FIG. 9 illustrates a signaling diagram;
FIG. 10 illustrates a signaling diagram;
FIG. 11 illustrates an example of an apparatus; and
FIG. 12 illustrates an example of an apparatus.

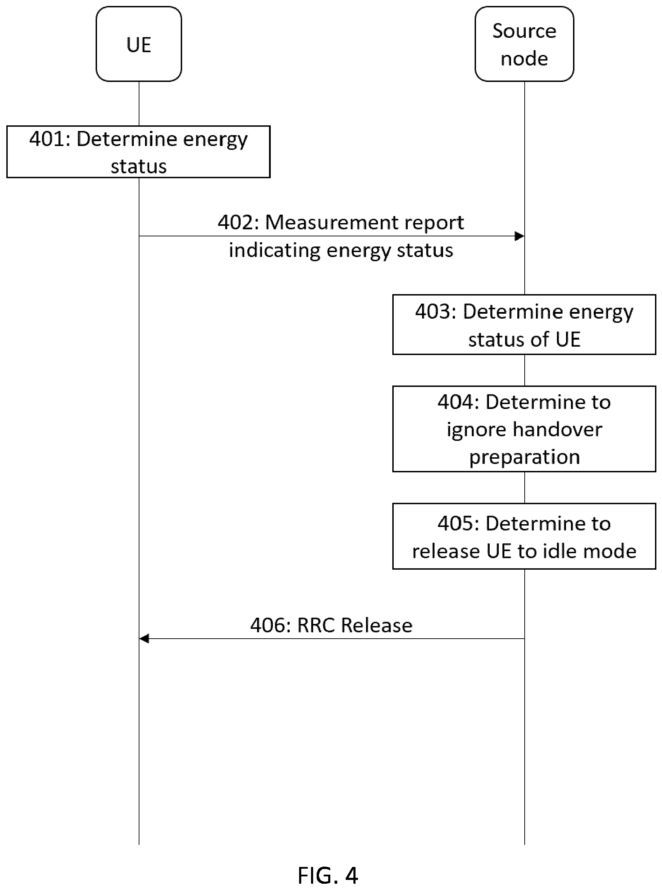

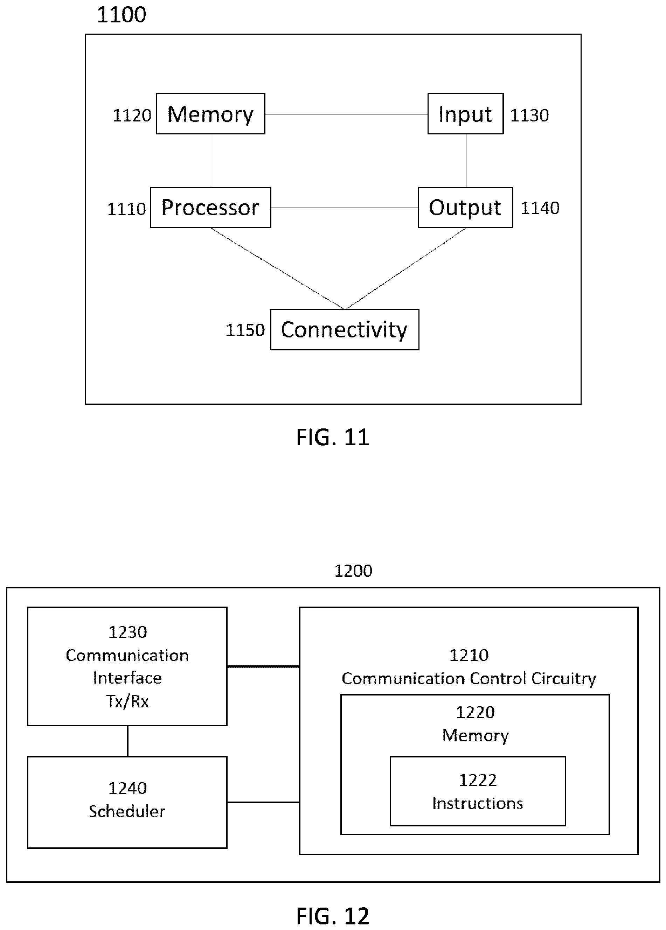

The embodiments related to figures 4 and 12 are not part of the claimed invention, they are only useful to understand the invention.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

In the following, different example embodiments will be described using, as an example of an access architecture to which the example embodiments may be applied, a radio access architecture based on long term evolution advanced (LTE Advanced, LTE-A), new radio (NR, 5G), beyond 5G, or sixth generation (6G) without restricting the example embodiments to such an architecture, however. It is obvious for a person skilled in the art that the example embodiments may also be applied to other kinds of communications networks having suitable means by adjusting parameters and procedures appropriately. Some examples of other options for suitable systems may be the universal mobile telecommunications system (UMTS) radio access network (UTRAN or E-UTRAN), long term evolution (LTE, substantially the same as E-UTRA), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

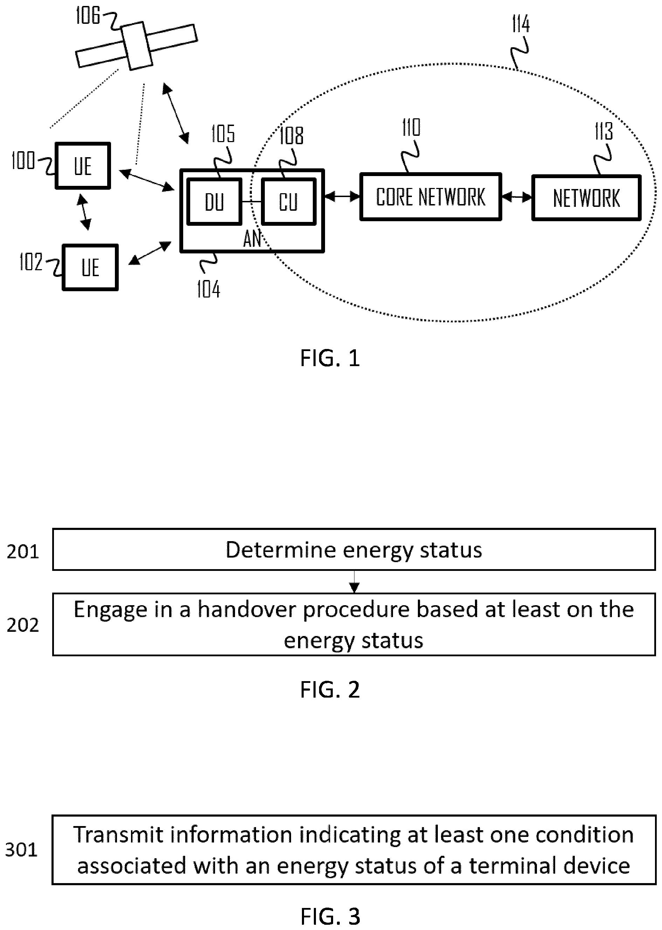

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may also comprise other functions and structures than those shown in FIG. 1.

The example embodiments are not, however, restricted to the system given as an example but a person skilled in the art may apply the solution to other communication systems provided with necessary properties.

The example of FIG. 1 shows a part of an exemplifying radio access network.

FIG. 1 shows user devices 100 and 102 configured to be in a wireless connection on one or more communication channels in a radio cell with an access node (AN) 104, such as an evolved Node B (abbreviated as eNB or eNodeB) or a next generation Node B (abbreviated as gNB or gNodeB), providing the radio cell. The physical link from a user device to an access node may be called uplink (UL) or reverse link, and the physical link from the access node to the user device may be called downlink (DL) or forward link. A user device may also communicate directly with another user device via sidelink (SL) communication. It should be appreciated that access nodes or their functionalities may be implemented by using any node, host, server or access point etc. entity suitable for such a usage.

A communication system may comprise more than one access node, in which case the access nodes may also be configured to communicate with one another over links, wired or wireless, designed for the purpose. These links may be used for signaling purposes and also for routing data from one access node to another. The access node may be a computing device configured to control the radio resources of communication system it is coupled to. The access node may also be referred to as a base station, a base transceiver station (BTS), an access point or any other type of interfacing device including a relay station capable of operating in a wireless environment. The access node may include or be coupled to transceivers. From the transceivers of the access node, a connection may be provided to an antenna unit that establishes bi-directional radio links to user devices. The antenna unit may comprise a plurality of antennas or antenna elements. The access node may further be connected to a core network 110 (CN or next generation core NGC). Depending on the deployed technology, the counterpart that the access node may be connected to on the CN side may be a serving gateway (S-GW, routing and forwarding user data packets), packet data network gateway (P-GW) for providing connectivity of user devices to external packet data networks, user plane function (UPF), mobility management entity (MME), or an access and mobility management function (AMF), etc.

The user device illustrates one type of an apparatus to which resources on the air interface may be allocated and assigned, and thus any feature described herein with a user device may be implemented with a corresponding apparatus, such as a relay node.

An example of such a relay node may be a layer 3 relay (self-backhauling relay) towards the access node. The self-backhauling relay node may also be called an integrated access and backhaul (IAB) node. The IAB node may comprise two logical parts: a mobile termination (MT) part, which takes care of the backhaul link(s) (i.e., link(s) between IAB node and a donor node, also known as a parent node) and a distributed unit (DU) part, which takes care of the access link(s), i.e., child link(s) between the IAB node and user device(s), and/or between the IAB node and other IAB nodes (multi-hop scenario).

Another example of such a relay node may be a layer 1 relay called a repeater. The repeater may amplify a signal received from an access node and forward it to a user device, and/or amplify a signal received from the user device and forward it to the access node.

The user device may also be called a subscriber unit, mobile station, remote terminal, access terminal, user terminal, terminal device, or user equipment (UE) just to mention but a few names or apparatuses. The user device may refer to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, multimedia device, reduced capability (RedCap) device, wireless sensor device, or any device integrated in a vehicle.

It should be appreciated that a user device may also be a nearly exclusive uplink-only device, of which an example may be a camera or video camera loading images or video clips to a network. A user device may also be a device having capability to operate in Internet of Things (IoT) network which is a scenario in which objects may be provided with the ability to transfer data over a network without requiring human-to-human or human-to-computer interaction. The user device may also utilize cloud. In some applications, a user device may comprise a small portable or wearable device with radio parts (such as a watch, earphones or eyeglasses) and the computation may be carried out in the cloud or in another user device. The user device (or in some example embodiments a layer 3 relay node) may be configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications may support a wide range of use cases and related applications including video streaming, augmented reality, different ways of data sharing and various forms of machine type applications (such as (massive) machine-type communications (mMTC), including vehicular safety, different sensors and real-time control. 5G may have multiple radio interfaces, namely below 6GHz, cmWave and mmWave, and also being integrable with existing legacy radio access technologies, such as the LTE. Integration with the LTE may be implemented, for example, as a system, where macro coverage may be provided by the LTE, and 5G radio interface access may come from small cells by aggregation to the LTE. In other words, 5G may support both inter-RAT operability (such as LTE-5G) and inter-RI operability (inter-radio interface operability, such as below 6GHz - cmWave - mmWave). One of the concepts considered to be used in 5G networks may be network slicing, in which multiple independent and dedicated virtual sub-networks (network instances) may be created within the substantially same infrastructure to run services that have different requirements on latency, reliability, throughput and mobility.

The current architecture in LTE networks may be fully distributed in the radio and fully centralized in the core network. The low latency applications and services in 5G may need to bring the content close to the radio which leads to local break out and multi-access edge computing (MEC). 5G may enable analytics and knowledge generation to occur at the source of the data. This approach may need leveraging resources that may not be continuously connected to a network such as laptops, smartphones, tablets and sensors. MEC may provide a distributed computing environment for application and service hosting. It may also have the ability to store and process content in close proximity to cellular subscribers for faster response time. Edge computing may cover a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system may also be able to communicate with one or more other networks 113, such as a public switched telephone network or the Internet, or utilize services provided by them. The communication network may also be able to support the usage of cloud services, for example at least part of core network operations may be carried out as a cloud service (this is depicted in FIG. 1 by "cloud" 114). The communication system may also comprise a central control entity, or the like, providing facilities for networks of different operators to cooperate for example in spectrum sharing.

An access node may also be split into: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such a split may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be defined as a logical node hosting higher layer protocols, such as radio resource control (RRC), service data adaptation protocol (SDAP) and/or packet data convergence protocol (PDCP), of the access node. The DU 105 may be defined as a logical node hosting radio link control (RLC), medium access control (MAC) and/or physical (PHY) layers of the access node. The operation of the DU may be at least partly controlled by the CU. The CU may comprise a control plane (CU-CP), which may be defined as a logical node hosting the RRC and the control plane part of the PDCP protocol of the CU for the access node. The CU may further comprise a user plane (CU-UP), which may be defined as a logical node hosting the user plane part of the PDCP protocol and the SDAP protocol of the CU for the access node.

Cloud computing platforms may also be used to run the CU 108 and/or DU 105. The CU may run in a cloud computing platform, which may be referred to as a virtualized CU (vCU). In addition to the vCU, there may also be a virtualized DU (vDU) running in a cloud computing platform. Furthermore, there may also be a combination, where the DU may use so-called bare metal solutions, for example application-specific integrated circuit (ASIC) or customer-specific standard product (CSSP) system-on-a-chip (SoC) solutions. It should also be understood that the distribution of functions between the above-mentioned access node units, or different core network operations and access node operations, may differ.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head (RRH) or a radio unit (RU), or an access node comprising radio parts. It is also possible that node operations may be distributed among a plurality of servers, nodes or hosts. Application of cloudRAN architecture enables RAN real-time functions being carried out at the RAN side (e.g., in a DU 105) and non-real-time functions being carried out in a centralized manner (e.g., in a CU 108).

It should also be understood that the distribution of functions between core network operations and access node operations may differ from that of the LTE or even be non-existent. Some other technology advancements that may be used include big data and all-IP, which may change the way networks are being constructed and managed. 5G (or new radio, NR) networks may be designed to support multiple hierarchies, where MEC servers may be placed between the core and the access node. It should be appreciated that MEC may be applied in 4G networks as well.

5G may also utilize non-terrestrial communication, for example satellite communication, to enhance or complement the coverage of 5G service, for example by providing backhauling. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay node or by an access node 104 located on-ground or in a satellite.

6G networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

It is obvious for a person skilled in the art that the depicted system is only an example of a part of a radio access system and in practice, the system may comprise a plurality of access nodes, the user device may have access to a plurality of radio cells and the system may also comprise other apparatuses, such as physical layer relay nodes or other network elements, etc. At least one of the access nodes may be a Home eNodeB or a Home gNodeB.

Additionally, in a geographical area of a radio communication system, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) of FIG. 1 may provide any kind of these cells. A cellular radio system may be implemented as a multilayer network including several kinds of radio cells. In multilayer networks, one access node may provide one kind of a radio cell or radio cells, and thus a plurality of access nodes may be needed to provide such a network structure.

For fulfilling the need for improving the deployment and performance of communication systems, the concept of "plug-and-play" access nodes may be introduced. A network which may be able to use "plug-and-play" access nodes, may include, in addition to Home eNodeBs or Home gNodeBs, a Home Node B gateway, or HNB-GW (not shown in FIG. 1). An HNB-GW, which may be installed within an operator's network, may aggregate traffic from a large number of Home eNodeBs or Home gNodeBs back to a core network.

5G is designed to address a wide range of use cases, such as the enhanced mobile broadband (eMBB), ultra-reliable low latency communication (URLLC), and massive machine-type communication (mMTC), with different requirements in terms of data rates, latency, reliability, coverage, energy efficiency, and connection density. mMTC may cover cellular low power wide area (LPWA) technologies such as narrowband internet of things (NB-IoT) and long term evolution for machine type communication (LTE-MTC). Yet another use case for 5G is time-sensitive communication (TSC).

However, in between these use cases, there are also some mid-range use cases, such as industrial wireless sensor networks, video surveillance, and wearables (e.g., smart watches, rings, eHealth-related devices, personal protection equipment, medical monitoring devices, etc.). In other words, the requirements of these mid-range use cases may be higher than LPWA, but lower than eMBB and URLLC.

In order to efficiently serve these mid-range use cases, the 3rd generation partnership project (3GPP) has introduced reduced capability (RedCap) devices in NR Release 17 (Rel-17). RedCap devices may also be referred to as NR-Lite devices or NR-Light devices. RedCap devices may have a reduced number of antennas, reduced bandwidth, and lower energy consumption than non-RedCap devices, such as eMBB UEs, URLLC UEs and other higher-end UEs. However, RedCap devices may also be required to fulfil certain latency and service availability requirements.

Industrial wireless sensors and actuators are one example of RedCap devices. It may be desirable to connect these sensors and actuators to 5G radio access and core networks in order to improve flexibility, enhance productivity and efficiency, and improve operational safety. Industrial wireless sensors may comprise, for example, pressure sensors, humidity sensors, thermometers, motion sensors, and/or accelerometers, etc. Industrial wireless sensor network use cases include not only URLLC services with very high requirements, but also relatively low-end services requiring small device form factors and/or being completely wireless with a battery life of several years. These low-end services may be provided by RedCap devices. Industrial wireless sensors associated with low-end services may also have the following use-case-specific requirements: communication service availability is at least 99.99%, end-to-end latency is less than 100 ms, and the reference bit rate is less than 2 Mbps (potentially asymmetric, e.g., UL heavy traffic) for all use cases and the device is expected to be mostly stationary. For safety-related sensors, the latency requirement may be more stringent, for example 5-10 ms.

Video surveillance cameras are another example of RedCap devices. The deployment of surveillance cameras may be beneficial, for example, for smart city use cases, as well as for factories and industries, in order to monitor and control city/factory resources more efficiently. The following requirements may apply for video surveillance use cases: the reference economic video bitrate is 2-4 Mbps, latency is less than 500 ms, and the reliability is at least 99% - 99.9%. High-end video applications (e.g., for farming) may require a video bitrate of 7.5-25 Mbps. It is noted that the traffic pattern may be dominated by UL transmissions.

Wearables, such as smart watches, rings, eHealth-related devices, personal protection equipment, and/or medical monitoring devices, are another example of RedCap devices. One characteristic for this use case is that the device is small in size. The following requirements may apply for wearables: the reference bitrate for smart wearable applications may be 5-50 Mbps in downlink (DL) and 2-5 Mbps in uplink (UL), and the peak bit rate of the device may be higher, for example up to 150 Mbps for DL and up to 50 Mbps for UL. In addition, the battery of the wearable device should last multiple days (e.g., up to 1-2 weeks).

RedCap devices and passive IoT devices may rely on energy harvesting. Energy harvesting may be considered in several use cases, in which a UE can harvest and store a limited amount of energy from the environment, for example from radio frequency (RF) signals, solar energy, vibration, heat energy, etc.

Passive IoT devices (or a part of a UE operating, or part of a UE or device configured to operate as a passive IoT device) may support communication with a reader UE via reflection (backscattering) or similar, which may be supported by very low-complexity hardware. A passive IoT device may harvest energy from the environment to power the passive IoT device for self-sustainable communication. A passive IoT device may potentially be equipped with a small-capacity battery or capacitor that may be charged with the harvested energy. Passive IoT devices may also be referred to as passive devices or tags or energy harvesting devices herein.

For example, sensors powered by solar energy are becoming popular, especially for small sensors deployed outdoors for monitoring. The maximum transmit power of such passive IoT devices may also be significantly smaller due to smaller battery size or absence of battery. For example, passive IoT devices may be used for delay-tolerant IoT-type of traffic (e.g., reporting temperature, traffic condition, etc).

The following areas may need enhancement to support energy harvesting devices: 1) simplified and adaptive procedures for operation with intermittently available energy and interrupted connections (e.g., random-access procedure, RRC protocol/RRC states handling, cell (re-)selection), 2) light-weight protocol for ultra-low power consumption, and 3) energy-neutral sustainable operation of devices.

For energy harvesting devices, as the energy arrival may be unpredictable, the focus is on using energy when it is available and not necessarily on saving energy all the time. There are some IoT use cases (e.g., smart logistics, smart warehouses, wearables, etc.), where mobility is involved, and there is a need to develop a simplified mobility procedure based on the available energy.

To provide a continuous service for a moving UE, a handover procedure, which may also be referred to as handoff, may be performed to change the UE from one cell to another. The UE may transmit measurement reports to its serving cell, if the radio link to the serving cell is getting degraded and/or a neighbor cell quality is becoming better than the serving cell quality. Based on these measurement reports, the network may move (i.e., hand over) the UE connection from the serving cell to the neighbor cell by transmitting a handover command to the UE. For example, when a UE with an ongoing call or data session is moving away from an area covered by the serving cell and entering an area covered by a neighbor cell, the session may be handed over from the gNB of the serving cell to the gNB of the neighbor cell in order to avoid terminating or interrupting the session, when the UE gets outside the range of the serving cell.

One solution to avoid frequent measurement reporting from the UE is to configure a conditional handover (CHO) to the UE. A conditional handover may be defined as a handover that is executed by the UE, when one or more handover execution conditions are met. In other words, the UE receives a handover command with a CHO configuration indicating one or more handover execution conditions, but the UE does not execute the handover command until the one or more conditions are met.

To be able to determine when the CHO can be configured, the UE may be configured with an A2 measurement event, where the UE would transmit the measurement report when the entering condition is met, i.e., radio measurement of the serving cell becomes worse than a threshold. The UE may report each time the A2 measurement event is met, and the serving gNB may then configure the UE to start measuring the received signals of one or more neighbor cells. After the neighbor cell measurement reports are received by the serving cell, the serving gNB may configure the UE with CHO.

The UE may be configured to report when the leaving condition of the A2 measurement event is met, i.e., the radio measurement of the serving cell becomes higher than a threshold. This would enable the serving cell to release the CHO reservations as they are no longer needed, i.e., the radio measurement of the serving is good enough to serve the UE. For this, the UE may transmit one RRC measurement report and the serving gNB may transmit one extra signaling message (RRCReconfiguration) to the UE for releasing the CHO preparations. On other occasions, the network may not release the CHO configuration, and the UE can keep on reporting the A2 measurement report on leave. Depending on the changes in the radio conditions, the entering condition of the measurement event A2 may be met multiple times within a specific time duration. The network can make A2 leave condition more difficult, i.e., increase the A2 threshold of leave condition. This would prevent UEs to meet the A2 leave condition frequently (and less reporting). However, it would risk other UEs in the network that does not have fluctuating measurements where it is necessary to send the measurement report on leave to prevent long CHO reservations.

The UE may start evaluating the execution condition(s) upon receiving the CHO configuration from the serving gNB, and stop evaluating the execution condition(s) once a handover is executed. An advantage of CHO is that it improves the mobility robustness compared to non-conditional handover by reducing the number of radio link failures and handover failures. This is achieved by de-coupling the handover execution phase from the preparation phase, thus enabling the UE to receive the handover command early when the radio link of the source cell is still sufficient and executing the handover later when the radio link of the target cell is strong enough.

The CHO configuration comprises the configuration of CHO candidate cell(s) generated by the candidate gNB(s) and execution condition(s) generated by the source gNB. An execution condition may comprise one or more trigger condition(s), for example CHO event A3 and/or CHO event A5. One or more reference signal types may be supported and one or more trigger quantities may be configured for the evaluation of the CHO execution condition of a single candidate cell. The one or more trigger quantities may comprise, for example, reference signal received power (RSRP), reference signal received quality (RSRQ), and/or signal-to-interference-plus-noise ratio (SINR).

CHO event A3 means that a trigger quantity (e.g., RSRP, RSRQ, and/or SINR) of a CHO candidate cell indicated in the CHO configuration exceeds the trigger quantity (e.g., RSRP, RSRQ, and/or SINR) of the serving cell by an offset for a certain time-to-trigger (TTT) period.

CHO event A5 means that the trigger quantity of the serving cell becomes lower than a first threshold, and the trigger quantity of a CHO candidate cell indicated in the CHO configuration exceeds a second threshold for a certain TTT period.

Currently, a UE may perform a handover procedure using DL reference signal measurements. However, monitoring the DL reference signal and performing a conditional handover is costly for energy harvesting devices in terms of energy usage, especially when the available energy is low.

For example, CHO requires reservations at all target cells in terms of contention-free random access (CFRA) preambles (in case CFRA is applied) and radio resources that are needed to serve the UE when it executes CHO. Thus, CHO reservations should not be kept for a long time if they are not needed anymore, for example due to decreasing trend of the energy arrival. Otherwise, the target cell will experience inefficient/long resource reservation (resources are limited).

Furthermore, each A2 measurement report on leave (sending measurement report when A2 leaving condition is met) would result in increased UE power consumption, which is not desirable when the energy arrival is low. Herein the energy arrival may refer to energy harvested by the UE from the environment.

Thus, there is a need to provide a new conditional handover procedure for example for energy harvesting devices (e.g., RedCap devices and passive IoT devices).

Some example embodiments provide such a CHO procedure that is based on the energy status of the UE (e.g., energy harvesting device). Some example embodiments are described below using principles and terminology of 5G technology without limiting the example embodiments to 5G communication systems, however.

FIG. 2 illustrates a flow chart according to an example embodiment of a method performed by an apparatus. For example, the apparatus may be, or comprise, or be comprised in, a terminal device. The terminal device may also be called a subscriber unit, mobile station, remote terminal, access terminal, user terminal, user device, or user equipment (UE). The terminal device may be, for example, an energy harvesting device such as a RedCap device or a passive IoT device, or any other type of terminal device. The terminal device may correspond to one of the UEs 100, 102 of FIG. 1.

Referring to FIG. 2, in block 201, the apparatus determines an energy status of the apparatus. The energy status may indicate at least one of the following: a current energy state of the apparatus, or a future energy state of the apparatus.

The current energy state refers to the energy state that the apparatus is currently in.

The future energy state refers to an anticipated energy state of the apparatus at a future point in time. The future energy state may be predicted, for example, based on a trend of energy arrival at the apparatus. The energy arrival may refer to, for example, energy harvested by the apparatus from the environment.

In block 202, the apparatus engages, based at least on the energy status of the apparatus, in a handover procedure associated with a network device for the apparatus. The network device may refer to, for example, a serving gNB of the apparatus.

The handover procedure may comprise at least one of the following: low layer mobility, primary cell (PCell) or primary secondary cell (PSCell) change, secondary cell (SCell) change, addition of a PSCell or any serving cell, initiation of multi-TRP communication, initiation of inter-cell beam management, and/or adding or changing a radio link.

FIG. 3 illustrates a flow chart according to an example embodiment of a method performed by an apparatus. For example, the apparatus may be, or comprise, or be comprised in, a network device of a radio access network. The network device may correspond to the access node 104 of FIG. 1.

Referring to FIG. 3, in block 301, the apparatus transmits, to a terminal device, information indicating at least one condition for at least one of the following: a handover procedure associated with the apparatus for the terminal device, or a measurement event at the terminal device, or at least one of intra-frequency measurement, inter-frequency measurement or inter radio access technology measurement at the terminal device, wherein the at least one condition is associated with an energy status of the terminal device.

The energy status may indicate at least one of the following: a current energy state of the terminal device, or a future energy state of the terminal device.

FIG. 4 illustrates a signaling diagram according to an example embodiment. This example embodiment involves a new CHO measurement report that indicates the energy status (e.g., the current energy state and/or future energy state) of the terminal device.

For example, based on the measurement report received at the network device, if the terminal device is in a high energy state but the energy arrival shows a decreasing trend, the network device evaluates that the terminal device will go to idle mode soon due to low incoming or stored energy, and thus the network device ignores the handover preparation and deprioritizes the CHO.

Referring to FIG. 4, in block 401, the terminal device determines an energy status of the terminal device. The terminal device may engage, based at least on the energy status of the terminal device, in a handover procedure associated with a network device for the terminal device. For example, the network device may be a serving gNB of the terminal device, wherein the serving gNB provides the current serving cell of the terminal device. The network device may also be referred to as a source node herein.

The energy status may indicate at least one of the following: a current energy state of the terminal device, or a future energy state of the terminal device. For example, the terminal device may be an energy harvesting device, and the future energy state may be determined based on a trend of energy arrival at the terminal device.

As an example, the terminal device may be in one of the four following energy states based on the amount of harvested or stored energy:
The terminal device may be in a first energy state (sleep mode), if the amount of harvested or stored energy is lower than a first energy threshold, in which case the terminal device or the network device may deprioritize the handover.

The terminal device may be in a second energy state (low energy state), if the amount of harvested or stored energy is equal to or higher than the first energy threshold but lower than a second energy threshold. In the second energy state, the terminal device may be in RRC idle or inactive mode, and the terminal device may, for example, transmit or receive paging messages, short messages, and/or small data transmissions (SDT).

The terminal device may be in a third energy state (high energy state), if the amount of harvested or stored energy is equal to or higher than the second energy threshold but lower than a third energy threshold. In the third energy state, the terminal device may transmit a small amount of uplink transmissions.

The terminal device may be in a fourth energy state (very high energy state), if the amount of harvested or stored energy is equal to or higher than the third energy threshold. In the fourth energy state, the terminal device may transmit a larger amount of uplink transmissions compared to the third energy state.

For example, the terminal device may have one of the following energy arrival patterns:
In a first example case, the trend of energy arrival is a strictly decreasing function in time, which indicates that the terminal device will go to a lower energy state soon.
In a second example case, the trend of energy arrival is not a strictly decreasing function, but the variance in energy arrival samples is quite small and it still can be approximated as a decreasing function, indicating that the terminal device will go to a lower energy state in the future.
In a third example case, the trend of energy arrival is a strictly increasing function in time, which indicates that the terminal device will go to a higher energy state soon.
In a fourth example case, the trend of energy arrival is not a strictly increasing function, but the variance in energy arrival samples is quite small and it still can be approximated as an increasing function, indicating that the terminal device will go to a higher energy state in the future.
In a fifth example case, the trend of energy arrival is varying at a faster rate and there is no clear pattern. Thus, it may be difficult to predict the future energy state.

In block 402, the terminal device transmits, to the network device, a measurement report indicating at least the energy status of the terminal device and measurements at the terminal device. In other words, in addition to the measurements, the measurement report also comprises the energy status of the terminal device. For example, the measurements measured by the terminal device may comprise reference signal received power (RSRP) and/or reference signal received quality (RSRQ) measurements of the serving cell and one or more target cells (e.g., neighbor cells of the serving cell).

In block 403, based on the measurement report, the network device determines the energy status of the terminal device. For example, the network device may determine the current energy state and the energy arrival pattern (future energy state) of the terminal device.

In block 404, the network device determines, based at least on the energy status of the terminal device, whether to prepare a handover for the terminal device.

For example, if the terminal device is currently in the third energy state (high energy state), but the energy arrival shows a decreasing trend, the network device may determine that the terminal device will go to idle or inactive mode soon due to low incoming or stored energy. In this case, the network device may ignore the handover preparation to deprioritize the CHO.

In case of no clear energy arrival pattern, the network device may determine, based on the current energy state of the terminal device, whether to proceed with the handover preparation.

In block 405, the network device determines, based at least on the energy status of the terminal device, whether to release the terminal device to a radio resource control idle mode or a radio resource control inactive mode after ongoing data transmissions end.

In block 406, in case of deprioritization of the CHO, the network device transmits an RRC release message to the terminal device for releasing the terminal device to radio resource control idle or inactive mode.

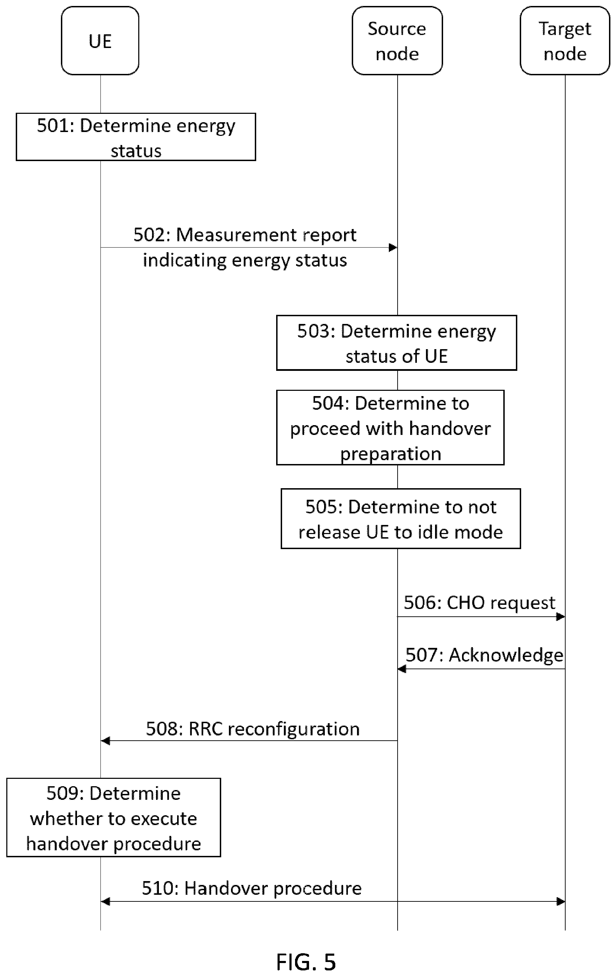

FIG. 5 illustrates a signaling diagram according to an example embodiment. This example embodiment involves a new CHO measurement report that indicates the energy status (e.g., the current energy state and/or future energy state) of the terminal device.

For example, if the terminal device is in a low energy state but the energy arrival shows an increasing trend, the network device continues with the handover preparation phase as the terminal device will move to a high energy state soon.

Referring to FIG. 5, in block 501, the terminal device determines an energy status of the terminal device. The terminal device may engage, based at least on the energy status of the terminal device, in a handover procedure associated with a network device for the terminal device. For example, the network device may be a serving gNB of the terminal device, wherein the serving gNB provides the current serving cell of the terminal device. The network device may also be referred to as a source node herein.

The energy status indicates at least one of the following: a current energy state of the terminal device, or a future energy state of the terminal device. For example, the terminal device may be an energy harvesting device, and the future energy state may be determined based on a trend of energy arrival at the terminal device. Some examples of the energy state and the trend of energy arrival are described above with reference to FIG. 4.

In block 502, the terminal device transmits, to the network device, a measurement report indicating at least the energy status of the terminal device and measurements at the terminal device. In other words, in addition to the measurements, the measurement report also comprises the energy status of the terminal device. For example, the measurements measured by the terminal device may comprise reference signal received power (RSRP) and/or reference signal received quality (RSRQ) measurements of the serving cell and one or more target cells.

In block 503, based on the measurement report, the network device determines the energy status of the terminal device. For example, the network device may determine the current energy state and the energy arrival pattern (future energy state) of the terminal device.

In block 504, the network device determines, based at least on the energy status of the terminal device, whether to prepare a handover for the terminal device.

For example, if the terminal device is currently in the first energy state (low energy state) but the energy arrival shows an increasing trend, the network device may continue with the handover preparation phase, as the terminal device will move to a high energy state soon.

In case of no clear energy arrival pattern, the network device may determine, based on the current energy state of the terminal device, whether to proceed with the handover preparation.

In block 505, the network device determines, based at least on the energy status of the terminal device, whether to release the terminal device to a radio resource control idle mode or a radio resource control inactive mode after ongoing data transmissions end. In this case, the network device determines to not release the terminal device to RRC idle or inactive mode, since the terminal device has enough energy available.

In block 506, in case of determining to proceed with the handover preparation, the network device transmits a CHO request message to a target node. The target node may be another network device controlling a neighbor cell of the current serving cell.

In block 507, the target node transmits an acknowledgement for the CHO request to the network device (source node).

In block 508, the network device (source node) transmits an RRC reconfiguration message to the terminal device. The RRC reconfiguration message may comprise information indicating at least one condition at the terminal device for a handover procedure associated with handing over the terminal device from the source node to the target node.

For example, the at least one condition may be associated with the energy status of the terminal device, such that the terminal device initiates the handover procedure upon entering a higher energy state (e.g., the third energy state or the fourth energy state). Alternatively, or additionally, the at least one condition may comprise an A3 event or A5 event, which are described above.

In block 509, the terminal device determines, based at least on the at least one condition at the terminal device, whether to execute the handover procedure.

In block 510, based on determining that the at least one condition is fulfilled, the terminal device executes a handover procedure for handing over the terminal device from the source node to the target node.

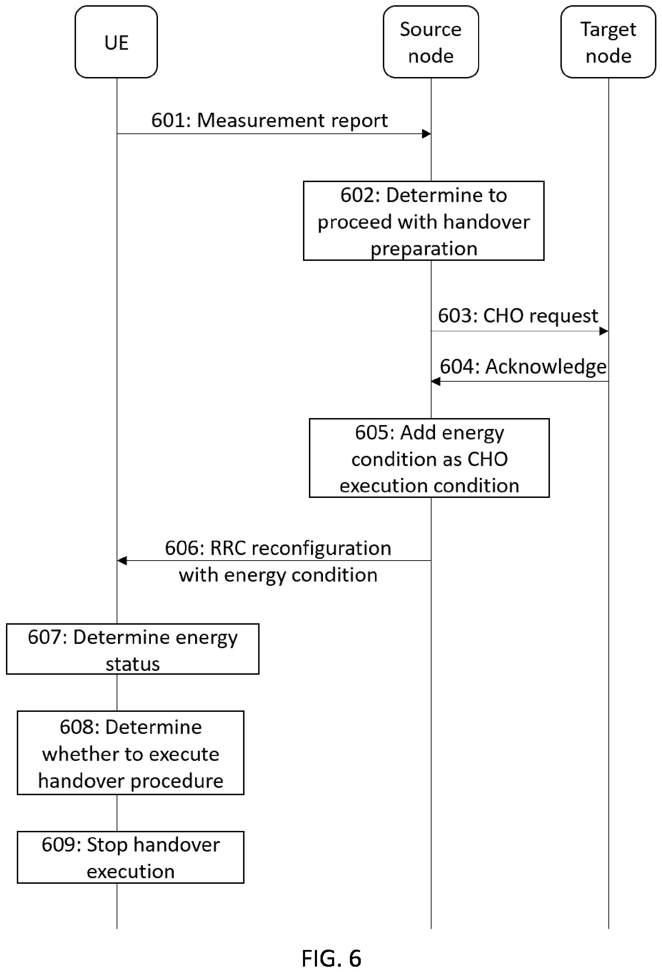

FIG. 6 illustrates a signaling diagram according to an example embodiment. This example embodiment involves a new handover execution condition for energy harvesting devices to be added based on the energy state and/or energy arrival at the terminal device.

For example, if the terminal device is in a high energy state but the energy arrival shows a decreasing trend, the terminal device will go to idle mode soon due to low incoming/stored energy, or if the current energy level is not enough for CHO execution, the terminal device stops the handover execution and deprioritizes the CHO.

Referring to FIG. 6, in block 601, the terminal device transmits, to the network device, a measurement report indicating at least measurements at the terminal device. For example, the network device may be a serving gNB of the terminal device, wherein the serving gNB provides the current serving cell of the terminal device. The network device may also be referred to as a source node herein.

For example, the measurements measured by the terminal device may comprise reference signal received power (RSRP) and/or reference signal received quality (RSRQ) measurements of the serving cell and one or more target cells.

In block 602, the network device determines, based at least on the measurement report, whether to prepare a handover for the terminal device.

In block 603, in case of determining to proceed with the handover preparation, the network device transmits a CHO request message to a target node. The target node may be another network device controlling a neighbor cell of the current serving cell.

In block 604, the target node transmits an acknowledgement for the CHO request to the network device (source node).

In block 605, the network device (source node) adds an energy condition as a CHO execution condition for the terminal device. For example, the network device may determine, based on capability information of the terminal device, that the terminal device is an energy harvesting device, and thus the network device may add the energy condition for the energy harvesting device.

For example, the energy condition may require that the current energy state of the terminal device is above a threshold and/or the future energy state of the terminal device is higher than the current energy state of the terminal device. The future energy state being higher than the current energy state may mean that the energy level associated with the future energy state is higher than the energy level associated with the current energy state. For example, the third energy state (high energy state) is considered to be higher than the second energy state (low energy state).

In block 606, the network device (source node) transmits an RRC reconfiguration message to the terminal device. The RRC reconfiguration message may comprise information indicating at least one condition at the terminal device for a handover procedure associated with handing over the terminal device from the source node to the target node.

The at least one condition may comprise at least the energy condition associated with the energy status of the terminal device. The at least one condition may also comprise an A3 event or A5 event, which are described above.

In block 607, the terminal device determines the energy status of the terminal device. The terminal device may engage, based at least on the energy status of the terminal device, in a handover procedure associated with the network device.

The energy status may indicate at least one of the following: a current energy state of the terminal device, or a future energy state of the terminal device. For example, the terminal device may be an energy harvesting device, and the future energy state may be determined based on a trend of energy arrival at the terminal device. Some examples of the energy state and the trend of energy arrival are described above with reference to FIG. 4.

In block 608, the terminal device determines, based at least on the at least one condition at the terminal device, whether to execute the handover procedure. In other words, the terminal device evaluates the CHO execution condition(s) including the energy condition.

In block 609, the terminal device stops executing the handover procedure and deprioritizes the CHO based at least on the energy status indicating that the current energy state of the terminal device is below a threshold and/or the future energy state of the terminal device is lower than the current energy state of the terminal device. The future energy state being lower than the current energy state may mean that the energy level associated with the future energy state is lower than the energy level associated with the current energy state. For example, the second energy state (low energy state) is considered to be lower than the third energy state (high energy state).

Even if all other CHO condition(s) except the energy condition are fulfilled, the terminal device does not execute the handover.

In an example case, if the terminal device is currently in the third energy state (high energy state), but the energy arrival shows a decreasing trend, the terminal device will go to idle mode soon due to low incoming/stored energy, then the terminal device stops the handover execution and deprioritizes the CHO.

As another example, if the current energy level is not enough for CHO execution, then the terminal device stops the handover execution and deprioritizes the CHO.

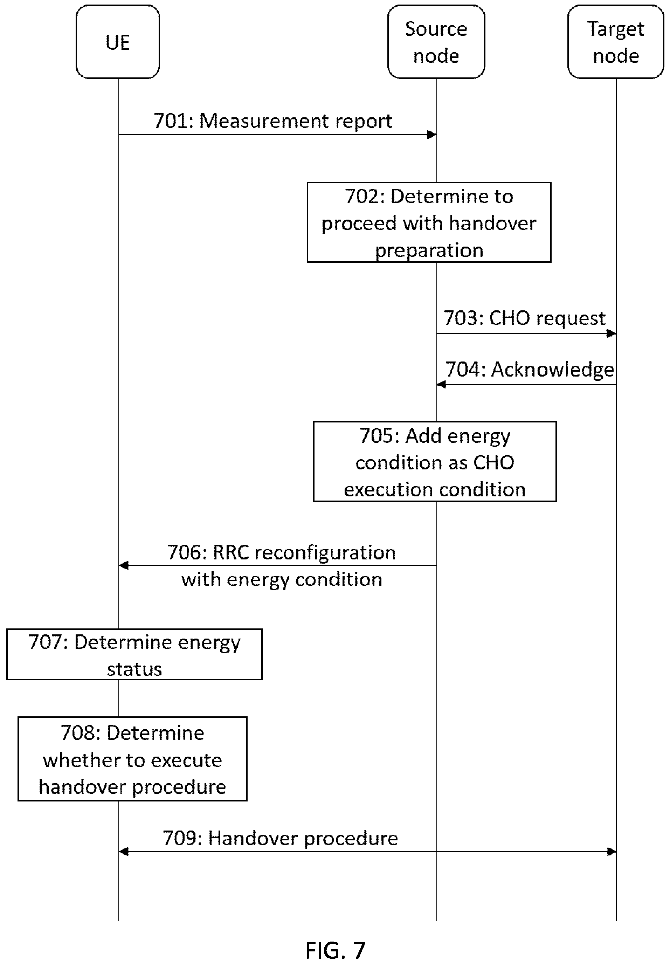

FIG. 7 illustrates a signaling diagram according to an example embodiment. This example embodiment involves a new handover execution condition for energy harvesting devices to be added based on the energy state and/or energy arrival at the UE side.

For example, if the terminal device is in a low energy state but the energy arrival shows an increasing trend, the terminal device may continue with the CHO execution phase as the terminal device has enough energy to complete the CHO.

Referring to FIG. 7, in block 701, the terminal device transmits, to the network device, a measurement report indicating at least measurements at the terminal device. For example, the network device may be a serving gNB of the terminal device, wherein the serving gNB provides the current serving cell of the terminal device. The network device may also be referred to as a source node herein.

For example, the measurements measured by the terminal device may comprise reference signal received power (RSRP) and/or reference signal received quality (RSRQ) measurements of the serving cell and one or more target cells.

In block 702, the network device determines, based at least on the measurement report, whether to prepare a handover for the terminal device.

In block 703, in case of determining to proceed with the handover preparation, the network device transmits a CHO request message to a target node. The target node may be another network device controlling a neighbor cell of the current serving cell.

In block 704, the target node transmits an acknowledgement for the CHO request to the network device (source node).

In block 705, the network device (source node) adds an energy condition as a CHO execution condition for the terminal device. For example, the network device may determine, based on capability information of the terminal device, that the terminal device is an energy harvesting device, and thus the network device may add the energy condition for the energy harvesting device.

For example, the energy condition may require that the current energy state of the terminal device is above a threshold and/or the future energy state of the terminal device is higher than the current energy state of the terminal device.

In block 706, the network device (source node) transmits an RRC reconfiguration message to the terminal device. The RRC reconfiguration message may comprise information indicating at least one condition at the terminal device for a handover procedure associated with handing over the terminal device from the source node to the target node.

The at least one condition may comprise at least the energy condition associated with the energy status of the terminal device. The at least one condition may also comprise an A3 event or A5 event, which are described above.

In block 707, the terminal device determines the energy status of the terminal device. The terminal device may engage, based at least on the energy status of the terminal device, in a handover procedure associated with the network device.

The energy status may indicate at least one of the following: a current energy state of the terminal device, or a future energy state of the terminal device. For example, the terminal device may be an energy harvesting device, and the future energy state may be determined based on a trend of energy arrival at the terminal device. Some examples of the energy state and the trend of energy arrival are described above with reference to FIG. 4.

In block 708, the terminal device determines, based at least on the at least one condition at the terminal device, whether to execute the handover procedure. In other words, the terminal device evaluates the CHO execution condition(s) including the energy condition.

In block 709, the terminal device executes the handover procedure based at least on the energy status indicating that the current energy state of the terminal device is above a threshold and/or the future energy state of the terminal device is higher than the current energy state of the terminal device. As a result of the handover procedure, the terminal device is handed over from the source node to the target node.

In other words, when all the CHO execution condition(s) are fulfilled (including the energy condition), the terminal device executes the CHO. For example, during the CHO execution phase, the terminal device may transmit a random-access preamble to the target node, and receive a random-access response from the target node.

In an example case, if the terminal device is in the first energy state (low energy state) but the energy arrival shows an increasing trend, then the terminal device continues with the handover execution phase, as the terminal device has enough energy to complete the handover.

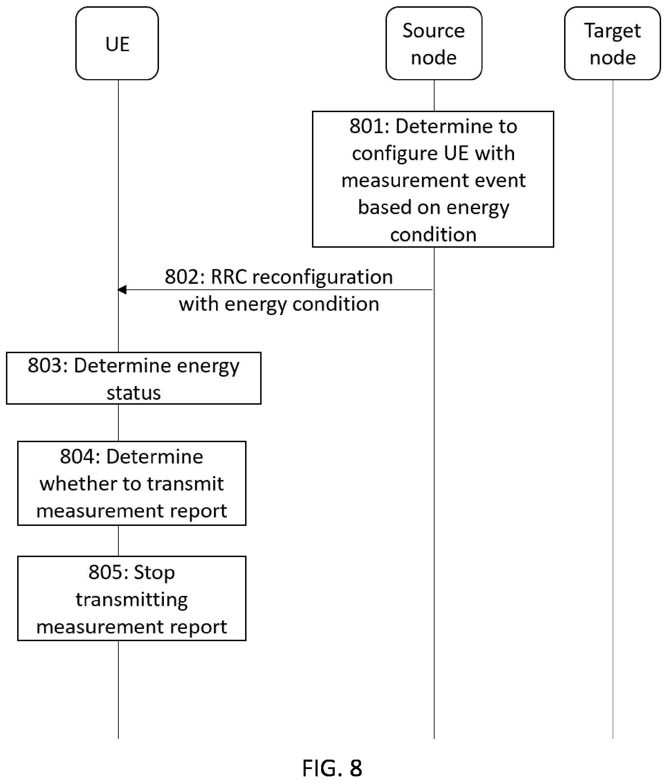

FIG. 8 illustrates a signaling diagram according to an example embodiment. This example embodiment involves a new energy state and/or energy arrival-based measurement event condition.

For example, if the terminal device is in a high energy state but the energy arrival shows a decreasing trend, the terminal device determines that it will go to idle mode soon due to low incoming/stored energy, and thus the terminal device stops the measurement report transmission based on the energy-based measurement event and completes the existing data transmission or reception.

Referring to FIG. 8, in block 801, the network device (source node) determines, based on capability information of the terminal device, that the terminal device is an energy harvesting device, and thus the network device determines to configure the terminal device with a measurement event based on an energy condition.

For example, the energy condition may require that the current energy state of the terminal device is above a threshold and/or the future energy state of the terminal device is higher than the current energy state of the terminal device in order to transmit the measurement report associated with the measurement event.

For example, the network device may be a serving gNB of the terminal device, wherein the serving gNB provides the current serving cell of the terminal device. The network device may also be referred to as a source node herein.

In block 802, the network device transmits an RRC reconfiguration message to the terminal device for the measurement event based on the energy condition. The RRC reconfiguration message comprises information indicating at least one condition for the measurement event, wherein the at least one condition is associated with the energy status of the terminal device. The network device may also define one or more radio link conditions for transmitting the measurement report.

In block 803, the terminal device determines the energy status of the terminal device.

The energy status may indicate at least one of the following: a current energy state of the terminal device, or a future energy state of the terminal device. For example, the terminal device may be an energy harvesting device, and the future energy state may be determined based on a trend of energy arrival at the terminal device. Some examples of the energy state and the trend of energy arrival are described above with reference to FIG. 4.

In block 804, the terminal device determines, based at least on the at least one condition, whether to transmit to the network device the measurement report associated with the measurement event.

If the radio link condition(s) for transmitting the measurement report are fulfilled but the energy condition is not fulfilled, the terminal device does not transmit the measurement report.

In block 805, the terminal device stops transmitting the measurement report associated with the measurement event, based at least on the energy status indicating that the current energy state of the terminal device is below a threshold and/or the future energy state of the terminal device is lower than the current energy state of the terminal device.

In an example case, if the terminal device is in the third energy state (high energy state) but the energy arrival shows a decreasing trend, the terminal device determines that it will go to idle mode soon due to low incoming/stored energy, and thus the terminal device stops the measurement report transmission and completes the existing data transmission or reception.

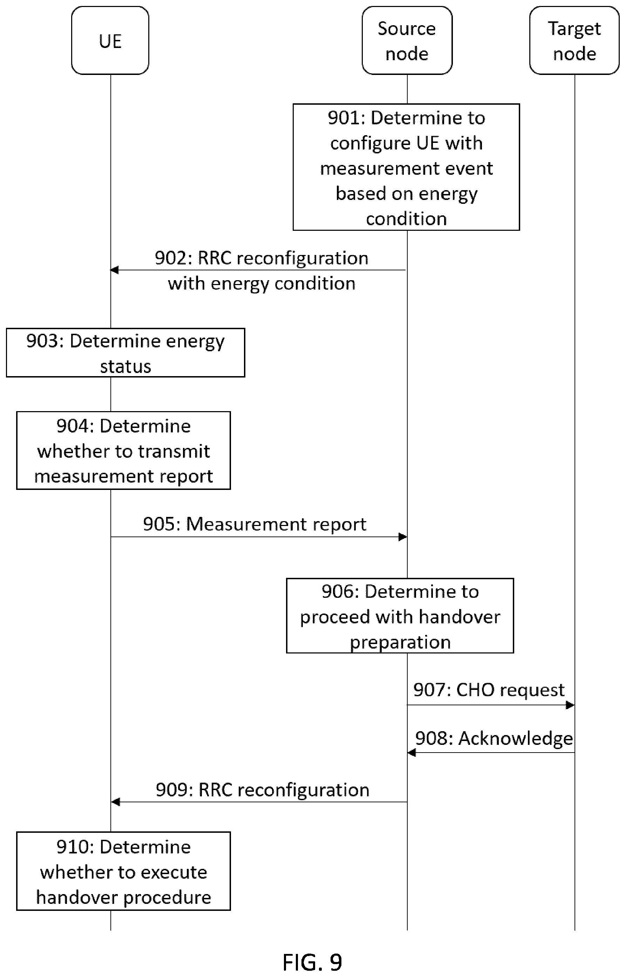

FIG. 9 illustrates a signaling diagram according to an example embodiment. This example embodiment involves a new energy state and/or energy arrival-based measurement event condition.

For example, if the terminal device is in a low energy state but the energy arrival shows an increasing trend, the terminal device continues with measurement report transmission, as the terminal device will move to a high energy state soon.

Referring to FIG. 9, in block 901, the network device (source node) determines, based on capability information of the terminal device, that the terminal device is an energy harvesting device, and thus the network device determines to configure the terminal device with a measurement event based on an energy condition.

For example, the energy condition may require that the current energy state of the terminal device is above a threshold and/or the future energy state of the terminal device is higher than the current energy state of the terminal device in order to transmit the measurement report associated with the measurement event.

For example, the network device may be a serving gNB of the terminal device, wherein the serving gNB provides the current serving cell of the terminal device. The network device may also be referred to as a source node herein.

In block 902, the network device transmits an RRC reconfiguration message to the terminal device for the measurement event based on the energy condition. The RRC reconfiguration message comprises information indicating at least one condition for the measurement event, wherein the at least one condition is associated with the energy status of the terminal device. The network device may also define one or more radio link conditions for transmitting the measurement report.

In block 903, the terminal device determines the energy status of the terminal device.

The energy status may indicate at least one of the following: a current energy state of the terminal device, or a future energy state of the terminal device. For example, the terminal device may be an energy harvesting device, and the future energy state may be determined based on a trend of energy arrival at the terminal device. Some examples of the energy state and the trend of energy arrival are described above with reference to FIG. 4.

In block 904, the terminal device determines, based at least on the at least one condition, whether to transmit to the network device the measurement report associated with the measurement event.

When all condition(s) for the measurement report transmission are fulfilled (including the energy condition), the terminal device is ready to transmit the measurement report.

In block 905, the terminal device transmits, to the network device (source node) the measurement report associated with the measurement event, based at least on the energy status indicating that the current energy state of the terminal device is above a threshold and/or the future energy state of the terminal device is higher than the current energy state of the terminal device. The measurement report indicates at least measurements at the terminal device. For example, the measurements measured by the terminal device may comprise reference signal received power (RSRP) and/or reference signal received quality (RSRQ) measurements of the serving cell and one or more target cells.

In an example case, if the terminal device is in a first energy state (low energy state) but the energy arrival shows an increasing trend, the terminal device continues with the measurement report transmission, as the terminal device will transition to a high energy state soon.

In block 906, the network device determines, based at least on the measurement report, whether to prepare a handover for the terminal device.

In block 907, in case of determining to proceed with the handover preparation, the network device transmits a CHO request message to a target node. The target node may be another network device controlling a neighbor cell of the current serving cell.

In block 908, the target node transmits an acknowledgement for the CHO request to the network device (source node).

In block 909, the network device (source node) transmits an RRC reconfiguration message to the terminal device for the CHO. The RRC reconfiguration message may comprise information indicating at least one handover execution condition at the terminal device for a handover procedure associated with handing over the terminal device from the source node to the target node.

The at least one handover execution condition may comprise, for example, an A3 event or A5 event, which are described above.

In block 910, the terminal device determines, based at least on the at least one handover execution condition at the terminal device, whether to execute the handover procedure.

Thus, the terminal device may engage, based at least on the energy status of the terminal device, in a handover procedure associated with the network device.

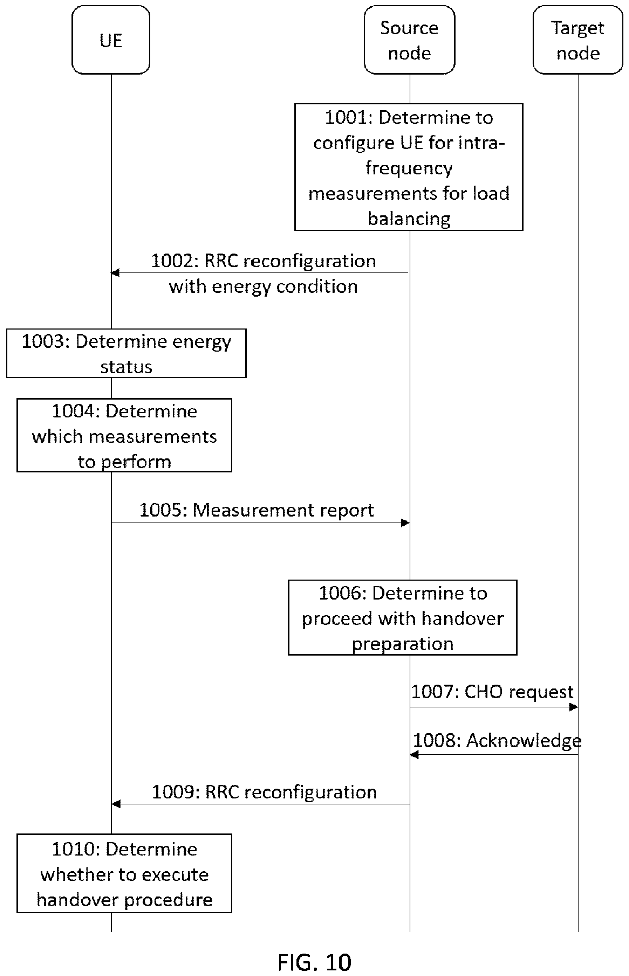

FIG. 10 illustrates a signaling diagram according to an example embodiment. In this example embodiment, the network device configures the terminal device with separate energy state and/or energy arrival thresholds for at least one of the following: inter radio access technology (inter-RAT) measurement, intra-frequency measurement, or inter-frequency measurement (i.e., for load balancing).

Referring to FIG. 10, in block 1001, the network device (source node) determines, based on capability information of the terminal device, that the terminal device is an energy harvesting device, and thus the network device determines to configure the terminal device with separate current energy state threshold and/or future energy state threshold for at least one of the following: intra-frequency measurement (i.e., measuring intra-frequency cells), inter-frequency measurement (i.e., measuring inter-frequency cells), or inter-RAT measurement (i.e., measuring cells of different RATs, e.g., 4G and 5G cells).

For example, the network device may be a serving gNB of the terminal device, wherein the serving gNB provides the current serving cell of the terminal device. The network device may also be referred to as a source node herein.

In block 1002, the network device transmits an RRC reconfiguration message to the terminal device for configuring the terminal device with the thresholds. The RRC reconfiguration message comprises information indicating at least one condition for at least one of intra-frequency measurement, inter-frequency measurement, or inter radio access technology measurement at the terminal device, wherein the at least one condition is associated with the energy status of the terminal device.

The inter-frequency measurement, intra-frequency measurement and inter-RAT measurement are different types of measurements. The inter-RAT measurements may also be in different frequencies like the inter-frequency measurements, but the difference is that the inter-RAT measurements are also for a different radio access technology. In other words, the inter-frequency measurements are for the same RAT, whereas the inter-RAT measurements are for different RATs.

The network device may not want to send the terminal device to another RAT as long as that is not the only solution. Thus, the network device may ask the terminal device to prioritize the measurements in the following order: intra-frequency measurements, inter-frequency measurements, and inter-RAT measurements. Thus, if the terminal device has energy problems, it will first stop the inter-RAT measurement, while still performing both the inter-frequency measurement and the intra-frequency measurement. If the terminal device still has energy problems, then it will also stop the inter-frequency measurement, and perform only the intra-frequency measurement.

In block 1003, the terminal device determines the energy status of the terminal device.

The energy status may indicate at least one of the following: a current energy state of the terminal device, or a future energy state of the terminal device. For example, the terminal device may be an energy harvesting device, and the future energy state may be predicted based on a trend of energy arrival at the terminal device. Some examples of the energy state and the trend of energy arrival are described above with reference to FIG. 4.

In block 1004, the terminal device determines, based at least on the at least one condition, whether to perform only the intra-frequency measurement, or to perform the intra-frequency measurement and the inter-frequency measurement, or to perform all of the intra-frequency measurement, the inter-frequency measurement and the inter radio access technology measurement, or to perform none of the intra-frequency measurement, the inter-frequency measurement, and the inter radio access technology measurement.

For example, if the terminal device is currently or predicted to be in the first energy state (sleep mode), then the terminal device may perform none of the measurements.

The terminal device may perform only the intra-frequency measurement, based at least on the energy status indicating that the current energy state of the terminal device is below a threshold and/or the future energy state of the terminal device is lower than the current energy state of the terminal device. For example, if the terminal device is currently or predicted to be in the second energy state (low energy state), then the terminal device may perform only the intra-frequency measurement.

The terminal device may perform at least the intra-frequency measurement and the inter-frequency measurement, based at least on the energy status indicating that the current energy state of the terminal device is above a threshold and/or the future energy state of the terminal device is higher than the current energy state of the terminal device. For example, if the terminal device is currently or predicted to be in the third energy state (high energy state), then the terminal device may perform the intra-frequency measurement and the inter-frequency measurement.

As another example, if the terminal device is currently or predicted to be in the fourth energy state (very high energy state), then the terminal device may perform all of the intra-frequency measurement, the inter-frequency measurement, and the inter-RAT measurement.

In block 1005, the terminal device transmits, to the network device (source node) a measurement report comprising the measurements that the terminal device determined to perform in block 1004.

In block 1006, the network device determines, based at least on the measurement report, whether to prepare a handover for the terminal device.

In block 1007, in case of determining to proceed with the handover preparation, the network device transmits a CHO request message to a target node. The target node may be another network device controlling a neighbor cell of the current serving cell.

In block 1008, the target node transmits an acknowledgement for the CHO request to the network device (source node).

In block 1009, the network device (source node) transmits an RRC reconfiguration message to the terminal device for the CHO. The RRC reconfiguration message may comprise information indicating at least one handover execution condition at the terminal device for a handover procedure associated with handing over the terminal device from the source node to the target node.

The at least one handover execution condition may comprise, for example, an A3 event or A5 event, which are described above.

In block 1010, the terminal device determines, based at least on the at least one handover execution condition at the terminal device, whether to execute the handover procedure.

Thus, the terminal device may engage, based at least on the energy status of the terminal device, in a handover procedure associated with the network device.

The example embodiments described above may save energy at the terminal device, as the measurement report triggering the preparation of the CHO configurations does not need to be sent frequently and the evaluation of the CHO configurations can be deactivated/activated without the need for RRC-related reconfigurations. Furthermore, the network would save RAN load for radio link monitoring (RLM) and mobility procedures due to reduced measurement reporting by the terminal device due to its energy status.

The blocks, related functions, and information exchanges (messages) described above by means of FIGS. 2-10 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 11 illustrates an example of an apparatus 1100 comprising means for performing one or more of the example embodiments described above. For example, the apparatus 1100 may be, or comprise, or be comprised in, a terminal device. The terminal device may also be called a subscriber unit, mobile station, remote terminal, access terminal, user terminal, user device, or user equipment (UE). The terminal device may be, for example, an energy harvesting device such as a RedCap device or a passive IoT device, or any other type of terminal device. The terminal device may correspond to one of the UEs 100, 102 of FIG. 1.

The apparatus 1100 may comprise a circuitry or a chipset applicable for realizing one or more of the example embodiments described above. For example, the apparatus 1100 may comprise at least one processor 1110. The at least one processor 1110 interprets instructions (e.g., computer program instructions) and processes data. The at least one processor 1110 may comprise one or more programmable processors. The at least one processor 1110 may comprise programmable hardware with embedded firmware and may, alternatively or additionally, comprise one or more application-specific integrated circuits (ASICs).

The at least one processor 1110 is coupled to at least one memory 1120. The at least one processor is configured to read and write data to and from the at least one memory 1120. The at least one memory 1120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 1120 stores computer readable instructions that are executed by the at least one processor 1110 to perform one or more of the example embodiments described above. For example, non-volatile memory stores the computer readable instructions, and the at least one processor 1110 executes the instructions using volatile memory for temporary storage of data and/or instructions. The computer readable instructions may refer to computer program code.

The computer readable instructions may have been pre-stored to the at least one memory 1120 or, alternatively or additionally, they may be received, by the apparatus, via an electromagnetic carrier signal and/or may be copied from a physical entity such as a computer program product. Execution of the computer readable instructions by the at least one processor 1110 causes the apparatus 1100 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 1100 may further comprise, or be connected to, an input unit 1130. The input unit 1130 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 1130 may comprise an interface to which external devices may connect to.

The apparatus 1100 may also comprise an output unit 1140. The output unit may comprise or be connected to one or more displays capable of rendering visual content, such as a light emitting diode (LED) display, a liquid crystal display (LCD) and/or a liquid crystal on silicon (LCoS) display. The output unit 1140 may further comprise one or more audio outputs. The one or more audio outputs may be for example loudspeakers.

The apparatus 1100 further comprises a connectivity unit 1150. The connectivity unit 1150 enables wireless connectivity to one or more external devices. The connectivity unit 1150 comprises at least one transmitter and at least one receiver that may be integrated to the apparatus 1100 or that the apparatus 1100 may be connected to. The at least one transmitter comprises at least one transmission antenna, and the at least one receiver comprises at least one receiving antenna. The connectivity unit 1150 may comprise an integrated circuit or a set of integrated circuits that provide the wireless communication capability for the apparatus 1100. Alternatively, the wireless connectivity may be a hardwired application-specific integrated circuit (ASIC). The connectivity unit 1150 may also provide means for performing at least some of the blocks of one or more example embodiments described above. The connectivity unit 1150 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 1100 may further comprise various components not illustrated in FIG. 11. The various components may be hardware components and/or software components.

FIG. 12 illustrates an example of an apparatus 1200 comprising means for performing one or more of the example embodiments described above. For example, the apparatus 1200 may be an apparatus such as, or comprising, or comprised in, a network device of a radio access network. The network device may correspond to the access node 104 of FIG. 1. The network device may also be referred to, for example, as a network element, a network node, a radio access network (RAN) node, a next generation radio access network (NG-RAN) node, a NodeB, an eNB, a gNB, a base transceiver station (BTS), a base station, an NR base station, a 5G base station, an access node, an access point (AP), a relay node, a repeater, an integrated access and backhaul (IAB) node, an IAB donor node, a distributed unit (DU), a central unit (CU), a baseband unit (BBU), a radio unit (RU), a radio head, a remote radio head (RRH), or a transmission and reception point (TRP).

The apparatus 1200 may comprise, for example, a circuitry or a chipset applicable for realizing one or more of the example embodiments described above. The apparatus 1200 may be an electronic device comprising one or more electronic circuitries. The apparatus 1200 may comprise a communication control circuitry 1210 such as at least one processor, and at least one memory 1220 storing instructions 1222 which, when executed by the at least one processor, cause the apparatus 1200 to carry out one or more of the example embodiments described above. Such instructions 1222 may, for example, include a computer program code (software), wherein the at least one memory and the computer program code (software) are configured, with the at least one processor, to cause the apparatus 1200 to carry out one or more of the example embodiments described above. The at least one processor and the at least one memory storing the instructions may provide the means for providing or causing the performance of any of the methods and/or blocks described above.

The processor is coupled to the memory 1220. The processor is configured to read and write data to and from the memory 1220. The memory 1220 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1220 stores computer readable instructions that are executed by the processor. For example, non-volatile memory stores the computer readable instructions and the processor executes the instructions using volatile memory for temporary storage of data and/or instructions.

The computer readable instructions may have been pre-stored to the memory 1220 or, alternatively or additionally, they may be received, by the apparatus, via an electromagnetic carrier signal and/or may be copied from a physical entity such as a computer program product. Execution of the computer readable instructions causes the apparatus 1200 to perform one or more of the functionalities described above.

The memory 1220 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data. For example, the configuration database may store a current neighbour cell list, and, in some example embodiments, structures of the frames used in the detected neighbour cells.

The apparatus 1200 may further comprise a communication interface 1230 comprising hardware and/or software for realizing communication connectivity according to one or more communication protocols. The communication interface 1230 comprises at least one transmitter (Tx) and at least one receiver (Rx) that may be integrated to the apparatus 1200 or that the apparatus 1200 may be connected to. The communication interface 1230 may provide means for performing some of the blocks for one or more example embodiments described above. The communication interface 1230 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1230 provides the apparatus with radio communication capabilities to communicate in the cellular communication system. The communication interface may, for example, provide a radio interface to one or more user devices. The apparatus 1200 may further comprise another interface towards a core network such as the network coordinator apparatus or AMF, and/or to the access nodes of the cellular communication system.

The apparatus 1200 may further comprise a scheduler 1240 that is configured to allocate radio resources. The scheduler 1240 may be configured along with the communication control circuitry 1210 or it may be separately configured.

It is to be noted that the apparatus 1200 may further comprise various components not illustrated in FIG. 12. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The embodiments are not limited to the example embodiments described above, but may vary without departing from the scope of the invention as defined by the claims.

## Claims

1. A terminal device (100, 1100) comprising:
means for receiving (508, 606, 706), from a network device (104, 1200), information indicating at least one condition at the terminal device (100, 1100) for a handover procedure, wherein the at least one condition is associated with an energy status of the terminal device (100, 1100);
means for determining (201, 501, 607, 707, 803, 903, 1003) the energy status of the terminal device (100, 1100), wherein the energy status indicates at least one of the following: a current energy state of the terminal device (100, 1100), or a future energy state of the terminal device (100, 1100);
means for engaging (202), based at least on the energy status of the terminal device (100, 1100), in the handover procedure associated with the network device (104, 1200) serving the terminal device (100, 1100); and
means for determining (509, 608, 708), based at least on the at least one condition at the terminal device (100, 1100), whether to execute the handover procedure,
wherein the means for determining (509, 608, 708) whether to execute the handover procedure comprise:
means for stopping (609) executing the handover procedure, based at least on the energy status indicating that the current energy state of the terminal device (100, 1100) is below a threshold and/or the future energy state of the terminal device (100, 1100) is lower than the current energy state of the terminal device (100, 1100); or
means for executing (510, 709) the handover procedure based at least on the energy status indicating that the current energy state of the terminal device (100, 1100) is above a threshold and/or the future energy state of the terminal device (100, 1100) is higher than the current energy state of the terminal device (100, 1100).

2. The terminal device (100, 1100) according to claim 1, further comprising:
means for transmitting ( 502, 601, 701, 905, 1005), to the network device (104, 1200), a measurement report indicating at least the energy status of the terminal device (100, 1100) and measurements at the terminal device (100, 1100).

3. A method comprising:
receiving (508, 606, 706), by a terminal device (100, 1100), from a network device (104, 1200), information indicating at least one condition at the terminal device (100, 1100) for a handover procedure, wherein the at least one condition is associated with an energy status of the terminal device (100, 1100);
determining (201, 501, 607, 707, 803, 903, 1003), by the terminal device (100, 1100), the energy status of the terminal device (100, 1100), wherein the energy status indicates at least one of the following: a current energy state of the terminal device (100, 1100), or a future energy state of the terminal device (100, 1100);
engaging (202), by the terminal device (100, 1100), based at least on the energy status of the terminal device (100, 1100), in the handover procedure associated with the network device (104, 1200) serving the terminal device (100, 1100); and
determining (509, 608, 708), by the terminal device (100, 1100), based at least on the at least one condition at the terminal device (100, 1100), whether to execute the handover procedure,
wherein the determination (509, 608, 708) of whether to execute the handover procedure comprises:
stopping (609) executing the handover procedure, by the terminal device (100, 1100), based at least on the energy status indicating that the current energy state of the terminal device (100, 1100) is below a threshold and/or the future energy state of the terminal device (100, 1100) is lower than the current energy state of the terminal device (100, 1100); or
executing (510, 709) the handover procedure, by the terminal device (100, 1100), based at least on the energy status indicating that the current energy state of the terminal device (100, 1100) is above a threshold and/or the future energy state of the terminal device (100, 1100) is higher than the current energy state of the terminal device (100, 1100).

## Patentansprüche

1. Endgerätevorrichtung (100, 1100), die Folgendes umfasst:
Mittel zum Empfangen (508, 606, 706) von Informationen, die mindestens eine Beschaffenheit an der Endgerätevorrichtung (100, 1100) für eine Übergabeprozedur anzeigen, von einer Netzwerkvorrichtung (104, 1200), wobei die mindestens eine Beschaffenheit mit einem Energiestatus der Endgerätevorrichtung (100, 1100) verknüpft ist;
Mittel zum Bestimmen (201, 501, 607, 707, 803, 903, 1003) des Energiestatus der Endgerätevorrichtung (100, 1100), wobei der Energiestatus mindestens eines von Folgendem anzeigt: einem aktuellen Energiezustand der Endgerätevorrichtung (100, 1100) oder einem künftigen Energiezustand der Endgerätevorrichtung (100, 1100);
Mittel zum Eingreifen (202) in die Übergabeprozedur, die mit der Netzwerkvorrichtung (104, 1200) verknüpft ist, dadurch Bedienen der Endgerätevorrichtung (100, 1100) auf Basis mindestens des Energiestatus der Endgerätevorrichtung (100, 1100); und
Mittel zum Bestimmen (509, 608, 708) mindestens auf Basis der mindestens einen Beschaffenheit an der Endgerätevorrichtung (100, 1100), ob die Übergabeprozedur ausgeführt werden soll,
wobei die Mittel zum Bestimmen (509, 608, 708), ob die Übergabeprozedur ausgeführt werden soll, Folgendes umfassen:
Mittel zum Beenden (609) des Ausführens der Übergabeprozedur mindestens darauf basierend, dass der Energiestatus anzeigt, dass der aktuelle Energiezustand der Endgerätevorrichtung (100, 1100) unter einem Schwellwert liegt und/oder der künftige Energiezustand der Endgerätevorrichtung (100, 1100) niedriger ist als der aktuelle Energiezustand der Endgerätevorrichtung (100, 1100); oder
Mittel zum Ausführen (510, 709) der Übergabeprozedur mindestens darauf basierend, dass der Energiestatus anzeigt, dass der aktuelle Energiezustand der Endgerätevorrichtung (100, 1100) über einem Schwellwert liegt und/oder der künftige Energiezustand der Endgerätevorrichtung (100, 1100) höher ist als der aktuelle Energiezustand der Endgerätevorrichtung (100, 1100).

2. Endgerätevorrichtung (100, 1100) nach Anspruch 1, die ferner Folgendes umfasst:
Mittel zum Übertragen (502, 601, 701, 905, 1005) eines Messberichts, der mindestens den Energiestatus der Endgerätevorrichtung (100, 1100) anzeigt, und von Messungen an der Endgerätevorrichtung (100, 1100) zur Netzwerkvorrichtung (104, 1200).

3. Verfahren, das Folgendes umfasst:
Empfangen (508, 606, 706) von Informationen, die mindestens eine Beschaffenheit an einer Endgerätevorrichtung (100, 1100) für eine Übergabeprozedur anzeigen, durch die Endgerätevorrichtung (100, 1100) von einer Netzwerkvorrichtung (104, 1200), wobei die mindestens eine Beschaffenheit mit einem Energiestatus der Endgerätevorrichtung (100, 1100) verknüpft ist;
Bestimmen (201, 501, 607, 707, 803, 903, 1003) des Energiestatus der Endgerätevorrichtung (100, 1100) durch die Endgerätevorrichtung (100, 1100), wobei der Energiestatus mindestens eines von Folgendem anzeigt: einem aktuellen Energiezustand der Endgerätevorrichtung (100, 1100) oder einem künftigen Energiezustand der Endgerätevorrichtung (100, 1100);
Eingreifen (202) in die Übergabeprozedur, die mit der Netzwerkvorrichtung (104, 1200) verknüpft ist, durch die Endgerätevorrichtung (100, 1100), dadurch Bedienen der Endgerätevorrichtung (100, 1100) auf Basis mindestens des Energiestatus der Endgerätevorrichtung (100, 1100); und
Bestimmen (509, 608, 708) durch die Endgerätevorrichtung (100, 1100) mindestens auf Basis der mindestens einen Beschaffenheit an der Endgerätevorrichtung (100, 1100), ob die Übergabeprozedur ausgeführt werden soll,
wobei das Bestimmen (509, 608, 708), ob die Übergabeprozedur ausgeführt werden soll, Folgendes umfasst:
Beenden (609) des Ausführens der Übergabeprozedur durch die Endgerätevorrichtung (100, 1100) mindestens darauf basierend, dass der Energiestatus anzeigt, dass der aktuelle Energiezustand der Endgerätevorrichtung (100, 1100) unter einem Schwellwert liegt und/oder der künftige Energiezustand der Endgerätevorrichtung (100, 1100) niedriger ist als der aktuelle Energiezustand der Endgerätevorrichtung (100, 1100); oder
Ausführen (510, 709) der Übergabeprozedur durch die Endgerätevorrichtung (100, 1100) mindestens darauf basierend, dass der Energiestatus anzeigt, dass der aktuelle Energiezustand der Endgerätevorrichtung (100, 1100) über einem Schwellwert liegt und/oder der künftige Energiezustand der Endgerätevorrichtung (100, 1100) höher ist als der aktuelle Energiezustand der Endgerätevorrichtung (100, 1100).

## Revendications

1. Dispositif terminal (100, 1100) comprenant :
des moyens pour recevoir (508, 606, 706) d'un dispositif de réseau (104, 1200) des informations indiquant au moins une condition sur le dispositif terminal (100, 1100) pour une procédure de transfert intercellulaire, dans lequel l'au moins une condition est associée à un statut d'énergie du dispositif terminal (100, 1100) ;
des moyens pour déterminer (201, 501, 607, 707, 803, 903, 1003) le statut d'énergie du dispositif terminal (100, 1100), dans lequel le statut d'énergie indique au moins un parmi : un état énergétique actuel du dispositif terminal (100, 1100) ou un état énergétique futur du dispositif terminal (100, 1100) ;
des moyens pour, en se basant au moins sur le statut d'énergie du dispositif terminal (100, 1100), s'engager (202) dans la procédure de transfert intercellulaire associée au dispositif de réseau (104, 1200) desservant le dispositif terminal (100, 1100) ; et
des moyens pour, en se basant au moins sur l'au moins une condition sur le dispositif terminal (100, 1100), déterminer (509, 608, 708) s'il convient d'exécuter la procédure de transfert intercellulaire,
dans lequel les moyens pour déterminer (509, 608, 708) s'il convient d'exécuter la procédure de transfert intercellulaire comprennent :
des moyens pour arrêter (609) l'exécution de la procédure de transfert intercellulaire en se basant au moins sur le statut d'énergie indiquant que l'état énergétique actuel du dispositif terminal (100, 1100) est en dessous d'un seuil et/ou que l'état énergétique futur du dispositif terminal (100, 1100) est inférieur à l'état énergétique actuel du dispositif terminal (100, 1100) ; ou
des moyens pour exécuter (510, 709) la procédure de transfert intercellulaire en se basant au moins sur le statut d'énergie indiquant que l'état énergétique actuel du dispositif terminal (100, 1100) est au-dessus d'un seuil et/ou que l'état énergétique futur du dispositif terminal (100, 1100) est supérieur à l'état énergétique actuel du dispositif terminal (100, 1100).

2. Dispositif terminal (100, 1100) selon la revendication 1, comprenant en outre :
des moyens pour transmettre (502, 601, 701, 905, 1005) au dispositif de réseau (104, 1200) un rapport de mesure indiquant au moins le statut d'énergie du dispositif terminal (100, 1100) et des mesures sur le dispositif terminal (100, 1100).

3. Procédé comprenant les étapes suivantes :
recevoir (508, 606, 706) d'un dispositif de réseau (104, 1200), par un dispositif terminal (100, 1100), des informations indiquant au moins une condition sur le dispositif terminal (100, 1100) pour une procédure de transfert intercellulaire, dans lequel l'au moins une condition est associée à un statut d'énergie du dispositif terminal (100, 1100) ;
déterminer (201, 501, 607, 707, 803, 903, 1003), par le dispositif terminal (100, 1100), le statut d'énergie du dispositif terminal (100, 1100), dans lequel le statut d'énergie indique au moins un parmi : un état énergétique actuel du dispositif terminal (100, 1100) ou un état énergétique futur du dispositif terminal (100, 1100) ;
en se basant au moins sur le statut d'énergie du dispositif terminal (100, 1100), s'engager (202), par le dispositif terminal (100, 1100), dans la procédure de transfert intercellulaire associée au dispositif de réseau (104, 1200) desservant le dispositif terminal (100, 1100) ; et
en se basant au moins sur l'au moins une condition sur le dispositif terminal (100, 1100), déterminer (509, 608, 708), par le dispositif terminal (100, 1100), s'il convient d'exécuter la procédure de transfert intercellulaire,
dans lequel le fait de déterminer (509, 608, 708) s'il convient d'exécuter la procédure de transfert intercellulaire comprend ce qui suit :
arrêter (609) l'exécution de la procédure de transfert intercellulaire, par le dispositif terminal (100, 1100) , en se basant au moins sur le statut d'énergie indiquant que l'état énergétique actuel du dispositif terminal (100, 1100) est en dessous d'un seuil et/ou que l'état énergétique futur du dispositif terminal (100, 1100) est inférieur à l'état énergétique actuel du dispositif terminal (100, 1100) ; ou
exécuter (510, 709) la procédure de transfert intercellulaire, par le dispositif terminal (100, 1100), en se basant au moins sur le statut d'énergie indiquant que l'état énergétique actuel du dispositif terminal (100, 1100) est au-dessus d'un seuil et/ou que l'état énergétique futur du dispositif terminal (100, 1100) est supérieur à l'état énergétique actuel du dispositif terminal (100, 1100).
